# EUROPEAN PATENT APPLICATION

(11) **EP 2 112 614 A1**
(43) Date of publication of application: **28.10.2009**
(21) Application number: 08154851.3
(22) Date of filing: 21.04.2008
(51) Int. Cl.: G06F 21/20

(54) **User access to a piece of electronic equipment in a computerized process control system**

(71) Applicant: ABB AS, 1396 Billingstad (NO)
(72) Inventor: Endresen, Jan, 1341, Slependen (NO); Brodtkorb, Dagfin, 1361, Østerås (NO); Carlson, Erik, 1450, Nesoddtangen (NO)
(74) Representative: Dahlstrand, Björn

(57) **Abstract**

The invention concerns a method, access control device (14; 30) and computer program product for providing user access to a piece of electronic equipment (30) in a computerized process control system (10) as well as to such a computerized process control system (10). In the system (10) an access control device (14; 30) receives, from a portable wireless communication device (34), a first identifier associated with this portable wireless communication device, compares the received first identifier with identifiers allowed for use in accessing the piece of equipment (30), and grants, in case the first identifier is found among the identifiers allowed for such use, the user of the portable wireless communication device (34) access to the piece of electronic equipment (30).

## Description

### TECHNICAL FIELD OF THE INVENTION

The present invention relates to accessing pieces of electronic equipment in computerized process control systems. The invention more particularly relates to a method, access control device and computer program product for providing user access to a piece of electronic equipment in a computerized process control system as well as to such a computerized process control system.

### DESCRIPTION OF RELATED ART

In computerized process control systems there may be many various pieces of electronic equipment involved in the control of a process. One type of piece of equipment that is an interface to the process is the field device. A field device provides control of and/or measurements in the process. Such a field device is then typically controlled by a controller and receives commands therefrom and performs various actions locally in the system. A field device may therefore be an element involved in the system such as a pump, a valve, a measuring unit etc. These elements include software that is used locally for handling the tasks they are assigned.

It is of interest for various system users to access these devices. Such access may then be performed through such a system user directly logging onto the field device using a keyboard or a keypad on the device. It is at the same time important that unauthorised persons do not access these field devices, since major disturbances or even hazardous states may occur in the process if they are operated in a wrong way.

It is often burdensome and complicated for a user to perform such logging on and further requires the user to memorize the login data that needs to be entered for getting access to a field device.

There is therefore a need for simplifying the way safe access is made to a piece of equipment in a process control system.

Persons are today more and more equipped with portable wireless communication devices, for instance cellular phones. It would therefore be of interest if these were possible to be put to use in accessing a piece of equipment in a computerized process control system.

There exist a number of documents describing the use of portable wireless communication devices used in accessing electronic devices.

WO 01/23694 does for instance describe a mobile phone used for transmitting an identification number to a control unit for an electronic locking unit and being equipped with a memory. The control unit then disables the electronic locking unit if the identification number is in the memory.

WO 2006/098690 describes a similar solution for an electronic lock, but here there is furthermore a system server, which updates authentication data information of the lock.

US 2006/0170533 describes a mobile device, like a phone, which may communicate with a wireless lock using Bluetooth or ZigBee. The mobile device sends a key request to an application server and the server returns a key if controls/rules associated with the lock are satisfied. The key is then sent to the mobile device if the rules are satisfied, whereupon the mobile device unlocks the wireless lock.

JP 2004088339, US 2002/0031228, US2003/0016828 and US 2003/0151493 all describe similar solutions in relation to locks for various doors. The last document mentions that access can be made to other objects than doors. However, in these documents a user of a mobile phone does not unlock a door based on a matching of a user identity with data stored in a memory, but instead based on a registration of a user being performed in a database.

None of these documents do describe the accessing of a piece of equipment in a computerized process control system.

### SUMMARY OF THE INVENTION

The present invention is therefore directed towards simplifying the accessing of pieces of equipment in a computerized process control system.

One object of the present invention is therefore to provide a method for providing user access to a piece of electronic equipment in a computerized process control system that is simplified for system users.

This object is according to a first aspect of the present invention achieved through a method for providing user access to a piece of electronic equipment in a computerized process control system, comprising the steps of:
receiving, in an access control device of the system, from a portable wireless communication device, a first identifier associated with this portable wireless communication device, comparing the received first identifier with identifiers allowed for use in accessing the piece of equipment, and
in case the first identifier is found among the identifiers allowed for such use granting the user of the portable wireless communication device access to said piece of electronic equipment.

Another object of the present invention is to provide an access control device for providing user access to a piece of electronic equipment in a computerized process control system that simplifies the accessing for system users.

This object is according to a second aspect of the present invention achieved through an access control device for providing user access to a piece of electronic equipment in a computerized process control system, comprising:
a first communication interface for communicating with a portable wireless communication device,
an access rights store including identifiers allowed for use in accessing the piece of equipment, and
a first control unit configured to:
   receive, from the portable wireless communication device via the first communication interface, a first identifier associated with this portable wireless communication device,
   compare the received first identifier with the identifiers allowed for use in accessing the piece of equipment, and
   in case the first identifier is found among the identifiers allowed for such use to grant the user of the portable wireless communication device access to
   said piece of electronic equipment.

Another object of the present invention is to provide a computer program product for providing user access to a piece of electronic equipment in a computerized process control system that simplifies the accessing for system users.

This object is according to a third aspect of the present invention achieved through a computer program product for providing user access to a piece of electronic equipment in a computerized process control system, comprising computer program code on a data carrier to make an access control device perform, when said code is loaded into said access control device:
receiving, from a portable wireless communication device, of a first identifier associated with this portable wireless communication device,
comparing of the received first identifier with identifiers allowed for use in accessing the piece of equipment, and
in case the first identifier is found among the identifiers allowed for such use granting the user of the portable wireless communication device access to said piece of electronic equipment.

Another object of the present invention is to provide a computerized process control system that simplifies the accessing of pieces of equipment for system users.

This object is according to a fourth aspect of the present invention achieved through a computerized process control system comprising a number of pieces of equipment and an access control device, said access control device comprising:
a first communication interface for communicating with a portable wireless communication device,
an access rights store including identifiers allowed for use in accessing a piece of equipment in the system, and,
a first control unit configured to:
   receive, from the portable wireless communication device via the first communication interface (38), a first identifier associated with this portable wireless communication device,
   compare the received first identifier with the identifiers allowed for use in accessing the piece of equipment, and
   in case the first identifier is found among the identifiers allowed for such use to grant the user of the portable wireless communication device access to
   said piece of electronic equipment.

The present invention has many advantages. Access to a piece of equipment in a process control system is provided in a secure fashion. This is furthermore done in a very user-friendly way, which may be done with a minimum of interaction by a system user.

According to one variation of the present invention there exists more than one set of access rights providing variations in access to the functionality provided by a piece of electronic equipment. In case the first identifier is found among the identifiers allowed for use in accessing the piece of equipment, then matching is performed of the first identifier to a set of access rights stored in the system for the first identifier and granting of access involves granting access to the functionality of the piece of equipment according to said set of access rights.

The above-described variation has the further advantage of raising the security in that differentiated user access is provided. Therefore a system user cannot influence functionality he is not entitled to.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a simplified computerized process control system comprising operator and engineering terminals, servers, a number of field devices as well as a control device communicating with field devices,
fig. 2 schematically outlines how a portable wireless communication device communicates with an access control server and with a field device for accessing said field device,
fig. 3 shows a block schematic of an access control server according to the present invention being in communication with a portable wireless communication device,
fig. 4 generally outlines an access rights store in the device in fig. 3 as well as its contents,
fig. 5 shows a flow chart outlining a number of method steps taken in a method of providing user access to a piece of electronic equipment performed by a field device, and
fig. 6 shows a flow chart outlining a number of method steps taken in a method of providing user access to a piece of electronic equipment performed by the access control server.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well-known devices, circuits, and methods are omitted so as not to obscure the description of the present invention with unnecessary detail.

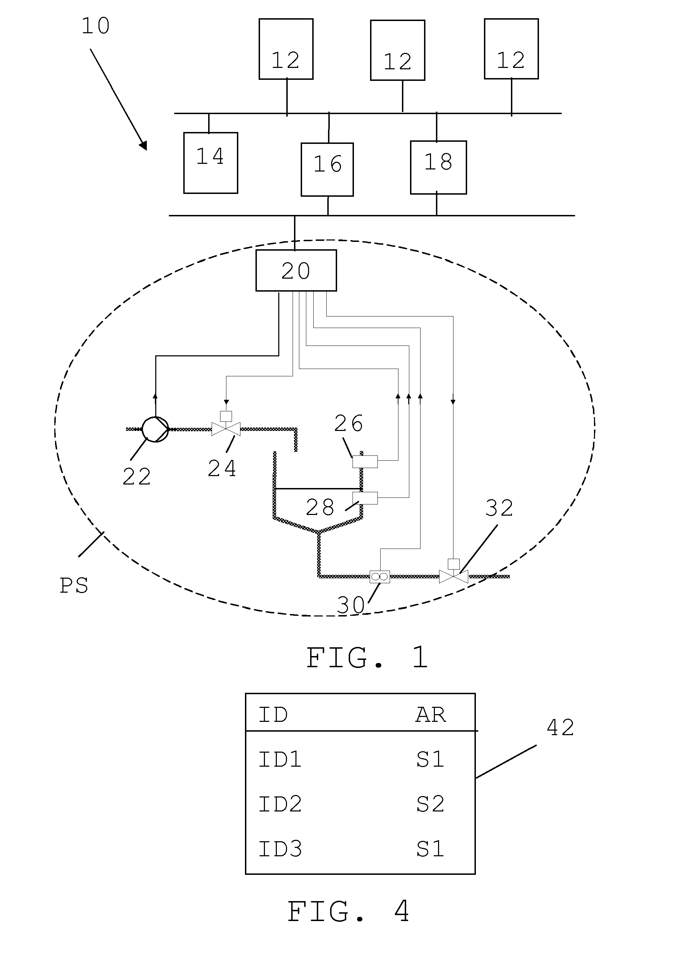

Fig. 1 schematically shows a computerized process control system 10. The system 10 is typically an object based computerised system for controlling a process or perhaps part of a process. Typical processes are electrical power generation and supply process, water purification and distribution processes, oil and gas production and distribution processes, petrochemical, chemical, pharmaceutical and food processes, and pulp and paper production processes. These are just some examples of processes where the system can be applied. There exist countless other processes. Normally there may in such a system be one or more controllers having some local software for controlling one or more field devices. The field devices may be different entities that influence or measure different properties of the technical process, like such things as a pump, a motor, a valve, etc. A process, or a part of a process, may be controlled via a server, which then typically communicates with a controller for providing control of a process. The process may be monitored through an operator terminal, which communicates with the server.

In fig. 1 the system 10 therefore includes a number of operator and engineering terminals 12 and an access control device 14 connected to a first bus. This access control device 14 is here an access control server. There is furthermore a second bus and between the first and second busses there are connected a first server 16 comprising computer objects providing control of the process and a second server 18 providing an application controlling the process through invoking objects in the first server 16. To the second bus there is furthermore connected a controller 20 (Process Controller or Programmable Logic Controller PLC) for providing control in the system 10. In the figure there is only provided one controller 20. It should however be realized that there may be several more controllers in the system 10. The controller 20 is then connected to one or more field devices. As an example the controller 20 is shown as being connected to a process section PS, which process section includes a first inlet pipe leading to a tank and a second outlet pipe leaving the tank. In the first pipe there is provided a pump 22 that pumps fluid into the first pipe as well as a first valve 24. In the tank there are provided two level sensors 26 and 28 and in the outlet pipe there is provided a flow meter 30 and a second valve 32. All these elements are field devices. Said controller 20 receives control input values from the pump 22 and level sensors 26 and 28 and regulates the fluid level in the tank based on these control input values through controlling the first valve 24. It also receives control input values from the flow meter 30 and controls the second valve 32 for regulating the output fluid flow. These entities are thus examples of field devices.

In such a system a system user may wish to access a piece of electronic equipment, like for instance one of the field devices. The reason for such logging on may be in order to perform updating of the software or to perform other types of operations such as to read statistical information, to monitor the equipment, to download configuration information etc. This is today performed through the system user directly logging onto the field device using a keyboard or a keypad on the device. This is burdensome and complicated for the user since it requires him/her to memorize the data that needs to be entered for getting access to the field device. There is also a risk of entering the wrong data. It is at the same time important that unauthorised persons do not access these field devices, since major disturbances or even hazardous states may occur in the process if they are operated in the wrong way. The access to the field device must therefore be provided in a safe but uncomplicated way.

This is according to the present invention solved through employing a portable wireless communication device for such accessing of a piece of equipment like a field device.

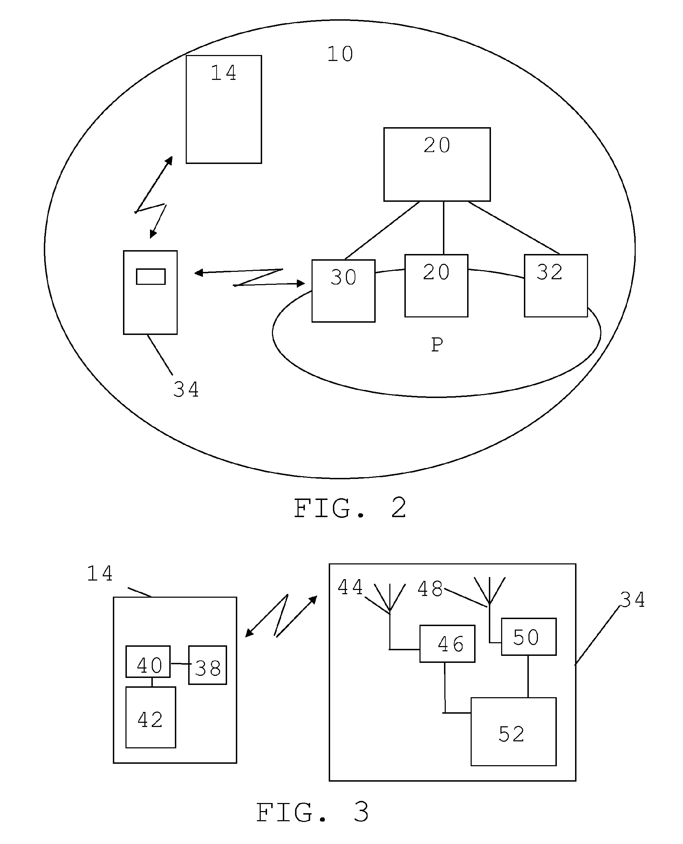

For this reason a simplified version of the control system is shown in fig. 2, where many of the different entities in fig. 1 have been omitted. In fig. 2 there is thus shown the access control server 14, the controller 20, a number of field devices 20, 30, and 32 interfacing the process P being controlled as well as a portable wireless communication device 34, here in the form of a cellular phone. The phone is here shown as communicating wirelessly with both one of the field devices 30 and the access control server 14. Depending on the distance between the phone and the device various means of communication may be used. It is possible to use a cellular network like a GSM, UMTS or a GPRS network as well as through direct wireless communication, such as using IR or Bluetooth. As an example the portable wireless communication 10 will in the following be described as communicating with a field device using Bluetooth and with a central access control server using a cellular network. It should here be mentioned that an access control device according to the present invention may be provided either centrally as an access control server or locally as a part of a piece of equipment in the system that is being accessed, for instance as a part of a field device.

Fig. 3 shows a block schematic in more detail of the parts of a portable wireless communication device 34 and of an access control device, here the access control server 14, involved in providing access to a piece of equipment. The access control server 14 includes a first communication interface 38 for communicating with a portable wireless communication device. This may be an interface to a cellular network or to a PSTN. However it may just as well be an interface to a computer network such as a wireless LAN or a fixed computer network like the Internet. It may likewise be a short-range communication interface, like a Bluetooth interface. It can even be provided in the form of a cable. There is furthermore a first control unit 40 connected to the first communication interface 38, which first control unit 40 is in turn connected to an access control store 42.

The portable wireless communication device 34 includes two wireless interfaces: a first short-range interface provided for Bluetooth communication and a second interface provided for cellular communication. The first interface is therefore made up of a first antenna 44 connected to a first radio communication unit 46 and the second interface is made up of a second antenna 48 connected to a second radio communication unit 50. Finally these two radio communication units are connected to a control unit 52.

Fig. 4 schematically shows a table of identifiers ID associated with portable communication devices of users and different corresponding sets of access rights AR. These different sets of access rights provide variations in access to the functionality provided by a piece of electronic equipment, here a field device. These different sets can here differ from each other regarding the access rights they give to a system user regarding for instance reading statistical information, monitoring equipment, downloading of configuration information and downloading of software. A set may here include a right to only one of these actions or a combination of these actions. The table is provided in the access control store 42 in the access control server. There may be provided one such table for each piece of equipment in the system that can be accessed using a portable wireless communication device. Alternatively there may a table that is common for a certain type of equipment or that is common for a section of the system. In the table there is shown a first identifier ID1 associated with a first portable wireless communication device. With this identifier ID1 there is associated a first set of access rights S1, which may be monitoring rights. There is also a second identifier ID2 associated with a second portable wireless communication device. With this identifier ID2 there is associated a second set of access rights S2, which may be software-downloading rights. There is finally a third identifier ID1 associated with a third portable wireless communication device. With this identifier ID1 there is also associated the first set of access rights S1. Thus the user of the third portable wireless communication device here has the same access rights as the user of the first portable communication device. It should be realised that the table in fig. 4 is only provided for exemplifying the invention and may be varied in many ways. It may for instance include more information.

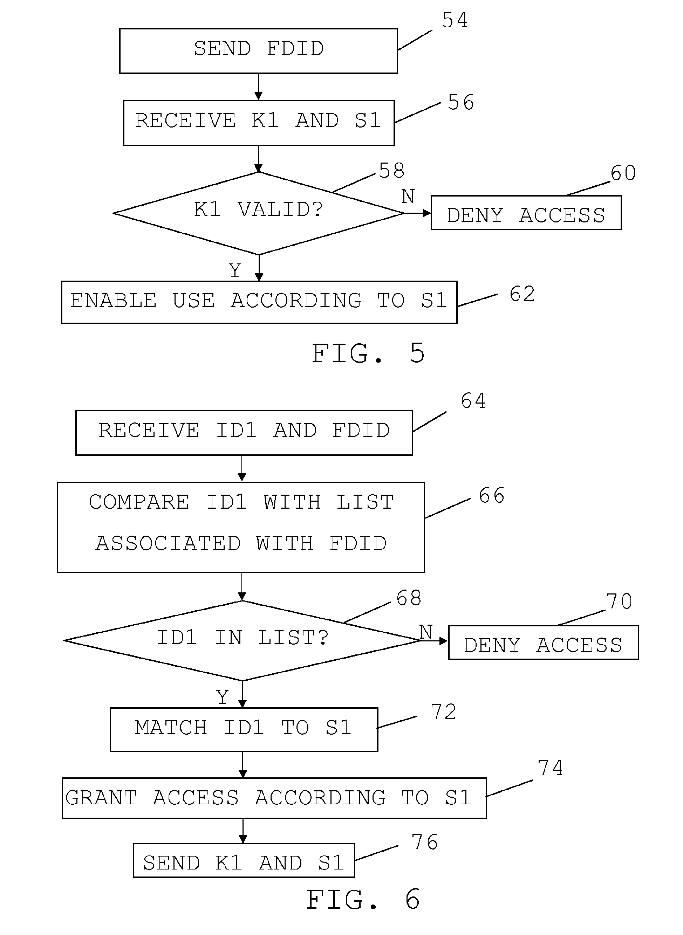

The functioning of the present invention according to a first embodiment of the present invention will now be described in relation to the previously mentioned fig. 1 - 4 as well as with reference being made to fig. 5, which shows a flow chart outlining a number of method steps taken in a field device, and to fig. 6, which shows a flow chart outlining a number of method steps taken in the access control server.

As a system user wants to access a piece of equipment in the system, such as a field device, he brings his portable wireless communication device 34, which may here be a cellular phone, close to the field device, which is here field device 30. The control unit 52 of the phone 34 may then send an inquiry regarding an equipment identifier to the field device 30 via the first interface 44 and 46. The field device 30 has a corresponding type of interface and control unit as the access control server, which interface and control unit are here termed second communication interface and second control unit. As the field device 30 receives the inquiry it then sends its equipment identifier that is here a field device identifier FDID to the phone 34, step 54. This identifier may for instance be a MAC address used in the process control system. It may also be an address associated with its interface to the phone 34 or a phone number, IMSI number or IMEI number in case the field device is provided with cellular communication capabilities.

As the phone 34 receives this field device identifier FDID, the control unit 52 of the phone 34 then goes on and fetches an identifier associated with it, which identifier is here termed a first identifier ID1. This first identifier ID1 may be the phone number associated with the phone. However it may also or additionally be an IMSI number of a SIM card or an IMEI number associated with the phone itself. It is advantageous if the identifier is an IMSI or a phone number, because these are more closely linked to the user than the IMEI number. The phone 34 then sends these two identifiers, the first identifier ID1 and the equipment identifier FDID to the access control server 14, which may as was mentioned earlier be done using a cellular network and the second interface 48 and 50.

The first identifier ID1 and the equipment identifier FDID are then received by the first control unit 40 of the access control server 14 via the first communication interface 38, step 64. The first control unit 40 here first fetches a number of identifiers that are associated with users allowed to access the field device 30 from the access rights store 42. It may here fetch these in the form of a list of the identifiers, which list is provided for the equipment identifier FDID and is here a list of the identifiers in the table in fig. 4. The first control unit 40 then compares the first identifier ID1 with the identifiers in this list associated with the received equipment identifier FDID, step 66. If the first identifier ID1 is not found in the list, step 68, access is denied, step 70, and the phone is informed of this fact. If however the first identifier ID1 was present in the list, step 68, the first identifier ID1 is matched to a corresponding set of access rights, which corresponding set of access rights is here the first set of access rights S1, step 72. Thereafter the first control unit 40 grants the user of the portable wireless communication device 34 access according to this set of access rights S1, step 74. The first control unit 40 then fetches a key K1 and sends it together with an indicator of the set of access rights S1 to the portable wireless communication device 34, step 76, via the first communication interface 38. The key K1 is here a key that is trusted by the field device 30. It may furthermore be a cryptographic key.

The phone 34 then resumes communication with the field device 30 and sends the received key K1 and access rights indicator S1 to it. When the second control unit of the field device 30 receives the key K1 and access rights indicator S1 via the second communication interface, step 56, it first investigates if the key K1 is valid, step 58. If it is not access is denied access, step 60. If the key K1 is valid, step 58, the user of the phone 34 is allowed access to the field device 30 according to the set of access rights S1, step 62. Access is thus granted based on the correctness of the key K1. It thus enables use of the field device according to the set of access rights S1. In this way the user can access the field device according to the access rights provided for him/her but not according to any other rights. Data related to functionality that is accessed in the field device may then be transmitted wirelessly between the field device and the portable wireless communication device in accordance with the set of access rights that are applicable. In case the key is a cryptographic key the validity of this key is investigated using cryptographic verification. It is here possible to use any type of conventional cryptographic verification scheme.

In this way it is possible to securely provide differentiated user access to a piece of electronic equipment according to the set of access rights that are applicable to the system user in question. This is furthermore done in a very user-friendly way, which may be done with a minimum of interaction by the system user.

It is here possible that the key is associated with the field device. There will in this case be provided one key per field device being served by the access control server.

A key may as an alternative instead be associated with a set of access rights. Then the field device will need to be able to recognize the various types of keys that are provided for different sets of access rights. In this case, the sending of an access rights indicator may be omitted, since this information is included in the key used. If security is a minor issue it is possible to only send an access rights indicator and no key from the access control server.

As an alternative to receiving a key, it is possible to receive a computer program from the access control server, which computer program then enables the accessing of the field device according to the set of access rights.

According to a second embodiment of the present device the access control device is not an access control server as described above, but is instead provided as a part of a piece of equipment, like as a part of a field device. In this case the field device would include the access rights store with the identifiers allowed for use in accessing the field device, perhaps in the form of a list, and the first control unit and first communication interface would replace the second control unit and second communication interface in the field device. The portable wireless communication device would then not need to inquire the equipment identifier, but may directly send its first identifier to the field device and the field device would then directly grant or deny access. There would in this case be no need for a key either.

As a further variation of the present invention it should be known that it is possible that there are no access rights variations between users. All users allowed access may thus as an alternative have the same type of rights to a piece of equipment, which is normally full access. In this case an access rights identifier would of course not be needed in the above-described first and second embodiments. The number of users allowed to access a field device, and thus the identifiers that are allowed to be used in such accessing, may vary. In its simplest form there is therefore only one identifier allowed for use in accessing a field device. Naturally this identifier does not have to be provided in a list.

It should be realized that access may furthermore in a similar manner be made to other pieces of equipment than field devices, for instance to controllers

The control unit of the access control device as well as the control unit of a piece of equipment being accessed may be implemented through one or more processors together with computer program code for performing its functions. The access rights store is preferably a memory, such as a RAM or a ROM memory. The program code mentioned above may also be provided as a computer program product, for instance in the form of one or more data carriers, for instance a CD ROM, carrying computer program code for performing the functionality of the present invention when being loaded into the computer. It is however feasible with other data carriers, like diskettes, memory sticks or USB memories. The computer program code of a control unit can furthermore be provided as pure program code on an external server and fetched from there for provision in the access control device.

The communication interfaces may use a number of communication standards. Examples of further types of communication in addition to the ones previously mentioned are IEEE 802.15.4 Wireless Hart, WLAN 802.11, ZigBee and WISA.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

## Claims

1. Method for providing user access to a piece of electronic equipment (30) in a computerized process control system (10) comprising the steps of:
receiving (64), in an access control device (14; 30) of the system, from a portable wireless communication device (34), a first identifier (ID1) associated with this portable wireless communication device,
comparing (66) the received first identifier (ID1) with identifiers (ID1, ID2, ID3) allowed for use in accessing the piece of equipment, and
in case the first identifier is found (68) among said identifiers allowed for such use granting (74) the user of the portable wireless communication device access to said piece of electronic equipment.

2. Method according to claim 1, wherein there exists more than one set (S1, S2, S3) of access rights providing variations in access to the functionality provided by the piece of electronic equipment and in case the first identifier is found among said identifiers allowed for such use further performing the step of matching (72) the first identifier (ID1) to a set (S1) of access rights stored in the system for said first identifier and the step of granting access comprises granting access to the functionality of the piece of equipment according to said set of access rights.

3. Method according to claim 1 or 2, wherein the set of access rights is associated with a group of pieces of equipment in a section of the system including said piece of equipment.

4. Method according to any previous claim, wherein the various sets of access rights provide variations in the access rights in relation to reading statistical information, monitoring equipment, downloading of configuration information, downloading of software or combinations of these.

5. Method according to any previous claim, further comprising the step of sending (76) a key (K1) from the access control device (14) to the portable wireless communication device for use in accessing the piece of equipment.

6. Method according to claim 5, further comprising the step of sending (54), from said piece of equipment (30) to said portable wireless communication device (34), an equipment identifier (FDID) associated with said piece of equipment, which equipment identifier (FDID) is received by the access control device (14) together with the first identifier (ID1), receiving (54), in said piece of equipment (30), said key (K1) from said portable wireless communication device and enabling (62), by said piece of equipment, the user of the portable wireless communication device use of said piece of equipment based on the validity (58) of the key.

7. Method according to claim 6, wherein the key is a cryptographic key, the validity of which is investigated using cryptographic verification.

8. Access control device (14; 30) for providing user access to a piece of electronic equipment (30) in a computerized process control system (10), comprising:
a first communication interface (38) for communicating with a portable wireless communication device (34),
an access rights store (42) including identifiers (ID1, ID2, ID3) allowed for use in accessing the piece of equipment, and
a first control unit (40) configured to:
receive, from the portable wireless communication device (34) via the first communication interface (38), a first identifier (ID1) associated with this portable wireless communication device,
compare the received first identifier with the identifiers allowed for use in accessing the piece of equipment, and
in case the first identifier is found among said identifiers allowed for such use to grant the user of the portable wireless communication device access to said piece of electronic equipment.

9. Access control device (14; 30) according to claim 8, wherein there exists more than one set (S1, S2, S3) of access rights providing variations in access to the functionality provided by the piece of electronic equipment and the first control unit (40) is further configured to, in case the first identifier (ID1) is found among said identifiers allowed for such use , match the first identifier to a set (S1) of access rights for said first identifier stored in the access rights store (42) and when granting access is further configured to grant access to the functionality of the piece of equipment according to said set of access rights.

10. Access control device (14; 30) according to claim 9, wherein the set of access rights is associated with a group of pieces of equipment in a section of the system including said piece of equipment.

11. Access control device (14; 30) according to any of claims 8 - 10, wherein the various sets of access rights provide variations in the access rights in relation to reading statistical information, monitoring equipment, downloading of configuration information, downloading of software or combinations of these.

12. Access control device (30) according to any of claims 8
- 11, wherein the device is part of the piece of equipment (30).

13. Access control device (30) according to claim 12, wherein the first communication interface is a wireless interface providing direct local wireless communication with the portable wireless communication device.

14. Access control device (14) according to any of claims 8
- 11, wherein it is an access control server (14) provided in the system and the first control unit (40) is configured to send a key (K1) to the portable wireless communication device (34) for use in accessing the piece of equipment (30).

15. Computerized process control system (10) comprising a number of pieces of equipment (20, 22, 24, 26, 28, 30, 32) and an access control device (14; 30), said access control device comprising:
a first communication interface (38) for communicating with a portable wireless communication device (34),
an access rights store (42) including identifiers (ID1, ID2, ID3) allowed for use in accessing a piece of equipment (30) in the system, and,
a first control unit (40) configured to:
receive, from the portable wireless communication device (34) via the first communication interface (38), a first identifier (ID1) associated with this portable wireless communication device (34),
compare the received first identifier with the identifiers allowed for use in accessing the piece of equipment (30), and
in case the first identifier is found among said identifiers allowed for such use to grant the user of the portable wireless communication device access to said piece of electronic equipment.

16. Computerized process control system (10) according to claim 15, wherein there exists more than one set (S1, S2, S3) of access rights providing variations in access to the functionality provided by the piece of electronic equipment and the first control unit (40) is further configured to, in case the first identifier (ID1) is found among said identifiers allowed for such use , match the first identifier to a set (S1) of access rights for said first identifier stored in the access rights store (42) and when granting access is further configured to grant access to the functionality of the piece of equipment (30) according to said set of access rights.

17. Computerized process control system (10) according to claim 15 or 16, wherein the various sets of access rights provide variations in the access rights in relation to reading statistical information, monitoring equipment, downloading of configuration information, downloading of software or combinations of these.

18. Computerized process control system (10) according to any of claims 15 - 17, wherein the access control device (14) is an access control server (14) provided in the system and the first control unit (40) is configured to send a key (K1) to the portable wireless communication device (34) for use in accessing the piece of equipment (30).

19. Computerized process control system (10) according to claim 18, wherein said piece of equipment (30) being accessed has a second communication interface and a second control unit, said second control unit being arranged to:
send an equipment identifier (FDID) associated with said piece of equipment (30) to said portable wireless communication device (34), which equipment identifier (FDID) is to be received by the access control server (14) together with the first identifier (ID1),
receive said key (K1) from said portable wireless communication device (34), and
enable the user of the portable wireless communication device use of said piece of equipment based on the validity of the key.

20. Computerized process control system (10) according to claim 19, wherein the key is a cryptographic key, the validity of which is investigated using cryptographic verification.

21. Computer program product for providing user access to a piece of electronic equipment (30) in a computerized process control system (10), comprising computer program code on a data carrier to make a an access control device (14; 30) perform, when said code is loaded into said access control device:
receiving, from a portable wireless communication device (34), of a first identifier (ID1) associated with this portable wireless communication device,
comparing of the received first identifier with identifiers (ID1, ID2, ID3) allowed for use in accessing the piece of equipment, and
in case the first identifier (ID1) is found among said identifiers allowed for such use granting the user of the portable wireless communication device access to said piece of electronic equipment.
